# EUROPEAN PATENT SPECIFICATION

(11) **EP 0 835 611 B1**
(45) Date of publication and mention of the grant of the patent: **25.02.2004**
(21) Application number: 97203160.3
(22) Date of filing: 10.10.1997
(51) Int. Cl.: A23C 19/05, A23C 19/055, A23C 19/09, A23C 19/093

(54) **Cheese which is form-stable when heated**
Bei Erhitzung formstabil bleibender Käse
Fromage gardant sa forme au chauffage

(30) Priority: 11.10.1996 NL 1004257
(43) Date of publication of application: 15.04.1998
(73) Proprietor: Friesland Brands B.V., 8937 AC Leeuwarden (NL)
(72) Inventor: Van Arem, Everhardus Jacobus Franciscus, 8802 CR Franeker (NL); Hup, Gerhard, 8921 TX Leeuwarden (NL)
(74) Representative: Smulders, Theodorus A.H.J., Ir.

(56) References cited:
- EP-A- 0 080 933
- EP-A- 0 260 194
- DE-A- 4 016 342
- DE-C- 922 321
- FR-A- 2 301 180
- FR-A- 2 394 984
- US-A- 3 962 483
- US-A- 4 919 943
- CHEMICAL ABSTRACTS, vol. 105, no. 17, 1986 Columbus, Ohio, US; abstract no. 96269e, XP002032355 & JP 61 088 838 A (EISAI CO)
- K. BALDWIN: "Evaluation of yield and quality of cheddar cheese manufactured from milk with added whey protein concentrate" JOURNAL OF DAIRY SCIENCE, vol. 69, no. 10, 1986, CHAPAIGN, ILLINOIS US, pages 2543-2550, XP002032353
- P. DE KONING: "Comparison of proteolysis in a low-fat semi-hard type of cheese manufactured by standard and by ultrafiltration techniques." NETHERLANDS MILK AND DAIRY JOURNAL, vol. 35, no. 1, 1981, WAGENINGEN NL, pages 35-46, XP002032354
- PATENT ABSTRACTS OF JAPAN vol. 008, no. 184 (C-239), 23 August 1984 & JP 59 078642 A (MEIJI NIYUUGIYOU KK;OTHERS: 01), 7 May 1984,
- PATENT ABSTRACTS OF JAPAN vol. 097, no. 003, 31 March 1997 & JP 08 308492 A (SANEI GEN F F I INC), 26 November 1996,

## Description

The invention relates to cheeses, in particular natural cheese or natural cheese products which are form-stable when heated.

Cheeses and cheese products are not only consumed or processed at room temperature. Before consumption, cheese is often subjected to a heating step.

Cheese and cheese products have the property to change its shape and/or structure at elevated temperature. Thus, e.g., in natural cheese the emulsion breaks at least partially, the cheese being separated into different main fractions, in particular into water, fat and protein fractions. This process causes the cheese, e.g., to flow, form threads and become somewhat tougher.

The above makes the taste sensation of cheese in hot dishes different from that in cold dishes. Examples of hot dishes in which cheese is used accordingly comprise pizzas, pastas and omelets. Also, dishes are often made au gratin, i.e. provided with a layer of cheese and heated in an oven for a short time.

Moreover, the behavior of cheese at elevated-temperature is utilized in the preparation of special dishes such as cheese fondues, quiches and soufflés.

However, the behavior shown by cheese at elevated temperature is not always desirable.

Partly for this reason, e.g., process cheeses have been developed. In process cheeses the emulsion remains normally stable when heated, although process cheeses begin to flow to a greater or less degree, and mainly depending on the moisture content. Process cheeses are prepared by heating cheese together with all kinds of, also non-natural, additives, including process salts. The mixture forms a melt which after cooling gives a stable emulsion. The additives serve to influence, e.g., the consistency, the shelf life and/or the flavor of the process cheese. Thus, a large number of agents are at the disposal of a person skilled in the art to impart a specific property to a process cheese.

To some extent, flowing of a process cheese can be limited by, e.g., lowering the moisture content or adjusting the acidity or the salt content. These measures,' however, are usually very much at the expense of the product quality, and in the case of lowering of the moisture content they are also less feasible from an economic viewpoint. More in detail, acidifying and/or salting the product to limit flowing usually lead to an organoleptically hardly acceptable product. The "control instruments" acidity, salt content and moisture content not only give an undesirable taste but also lead to a product having a dry, granular and/or tough mouthfeel.

U.S. patent 3,962,483 describes the behavior of both cheeses and process cheeses when heated. It is indicated that natural cheeses become soft at a temperature of about 50°C and that specific hard cheeses melt at a temperature of 80-90°C. Slices of natural cheese, however, flow in but a minor degree. Process cheeses, however, melt rapidly and "run off" the base.

Furthermore, the above U.S. patent indicates that natural cheeses and hard cheeses have the drawback that they form threads when heated, become tough and release whey.

The aim is then to prepare a process cheese product which is just as form-stable as the natural or hard cheese and therefore flows in but a minor degree at elevated temperature, but which does not have the drawbacks of natural or hard cheese. Subsequently, the production of a process cheese is presented as the invention, wherein a protein coagulating at temperatures above 70°C is added to the ready process cheese product. More in detail, there is first prepared a process cheese, this process cheese is cooled to a temperature below 70°C, and at this temperature a protein coagulating at temperatures above 70°C is added, after which the process cheese is once again heated to above 70°C.

As stated above, there is thus obtained a process cheese product which when heated does not become tough, does not form threads and does not release whey, but which flows just as little as natural cheese.

Japanese patent application 59-078642 describes the preparation of a heat-resistant cheese having a high fat content. In this preparation a number of additives are added to a curd or cheese milk. Because of the nature of the essential additives gum and lecithin, the product described falls within the term "process cheese".

FR-A-2 301 180 discloses a process for incorporating thermocoagulable lactoserum proteins into cheeses. EP-A-0 260194 discloses a process for the treatment of cheeses comprising the addition of lactoserum proteins to said cheeses. EP-A-0 080 933 discloses a process for the recovery of lactoserum proteins and their use for the manufacture of cheese. DE-A-40 16 342 discloses a cheese production process, wherein a whey protein concentrate is subjected to heat coagulation.

K. BALDWIN: "Evaluation of yield and quality of cheddar cheese manufactured from milk with added whey protein concentrate" JOURNAL OF DAIRY SCIENCE, vol. 69, no. 10, 1986, CHAPAIGN, ILLINOIS US, pages 2543-2550, XP002032353, discloses a Cheddar cheese production process, wherein the used whey proteins are at least partially denaturated by heating for 15 min at 70°C. FR-A-2 394 984 discloses a process for manufacturing cheese, comprising the addition of whey proteins in coagulated from and US-A-4 919 943 concerns a process for making a pasta filata-type cheese.

P. DE KONING: "Comparison of proteolysis in a low-fat semi-hard type of cheese manufactured by standard and by ultrafiltration techniques." NETHERLANDS MILK AND DAIRY JOURNAL, vol. 35, no. 1, 1981, WAGENINGEN NL, pages 35-46, XP002032354, examines the effects of whey protein on the cheese ripening.

DE-C-922 321 discloses cheeses comprising proteins, which are added to accelerate the ripening process.

For completeness' sake, it is further mentioned that when measures such as acidifying and/or salting or adjusting the moisture content are taken in natural cheese, the taste and mouthfeel problems as described above for process cheese also occur.

The object of the present invention is to even more inhibit the flow behavior of cheese and cheese products when heated. In other words, the aim is to obtain a natural cheese or natural cheese product which when heated substantially retains its shape and outer structure.

It has now been found that a natural cheese or a natural cheese product comprising a coagulable protein composition substantially does not flow in heating treatments such as those conventionally applied during food preparation methods, e.g. when heated in an oven.

By the term "natural cheese" is meant in this specification: a product obtained by renneting milk or buttermilk or a mixture of these raw materials, whether or not with milk constituents added thereto or withdrawn therefrom; removal of whey; to which products auxiliary substances, additives or articles of food and drink, including herbs and spices, are or are not added before, during or after preparation. This definition has been derived from the Dutch agricultural quality decree on cheese products.

In this specification and in the claims the term "natural cheese product" refers to a cheese product on the basis of natural cheese comprising coagulable proteins that are not peculiar to milk or hydrolysates thereof.

As stated above, natural cheese flows at elevated temperatures. By this is meant that the viscosity of the cheese becomes lower so that a kneadable or even a more or less liquid consistency is obtained. Thus threads are mostly formed, and in general a separation into the main constituents water, protein and fat takes place. As a result of this separation the cheese not only loses its shape, but the product properties such as taste and mouthfeel drastically change.

According to the invention this flowing behavior of natural cheese at elevated temperatures is substantially prevented by the presence of a coagulable protein composition. When the natural cheese or the natural cheese product according to the invention is heated above the coagulation temperature of the protein composition, e.g. during boiling, the proteins of the coagulable protein composition denature. Thus a substantially firm structure is formed, which is a sufficiently solid network to ensure that the product retains its shape and does not flow.

The natural cheese or the natural cheese product according to the invention, which substantially does not flow when heated, proves to retain its outer appearance when heated. Especially the dimensions of the product vary at most within very small margins of maximally 10% and more preferably 5%, most preferably 2%.

Besides, it is known from Chemical Abstracts, Vol. 105, No. 17 (1986), 96269e that the physical properties of a curd for a Cheddar cheese are improved by the presence of chicken protein.

The amount of coagulable protein composition which according to the invention is present in the natural cheese or the natural cheese product is from 1 to 10 wt.%, preferably from 2 to 7 wt.%, most preferably between 4 and 5 wt.%, based on the final product. It has been found that using these amounts the desired effect is obtained without adversely affecting other properties of the product.

When selecting a suitable coagulable protein composition, it is important to select a protein composition which substantially does not adversely affect the taste of' the cheese. It is further important for the coagulation temperature of the protein composition to be between suitable temperatures. A coagulable protein composition is selected the coagulation temperature of which is between 65 and 95°C, preferably between 70 and 80°C, because these values are usually exceeded during the selected preparation method using heat.

The coagulable protein composition according to the invention may comprise different proteins that are or are not peculiar to milk or hydrolysates thereof. Examples of proteins which may be present in the protein composition in partly or not partly hydrolyzed form comprise chicken protein, albumins and non-denatured whey proteins. A protein composition which has proved to be very suitable according to the invention is protein K (Koag®) which is commercially available through the firm of Mullerwerder AG. This composition is a mixture of high-grade animal proteins substantially based on chicken protein and protein hydrolysates having heat-coagulating properties. The addition of this composition does not prove to adversely affect the taste of the cheese product.

A product specification is given in Table 1 and Table 2.

**Table 1**

| | |
|---|---|
| protein | ca. 68% |
| lactose | ca. 15% |
| other carbohydrates | ca. 19% |
| fat | < 1% |
| water | < 1% |

**Table 2**

| | Amino acid analysis |
|---|---|
| alanine | 3.1 |
| isoleucine | 4.1 |
| leucine | 5.4 |
| valine | 4.8 |
| methionine | 2.4 |
| cysteine | 1.5 |
| phenylaniline | 4.1 |
| tyrosine | 2.7 |
| threonine | 2.4 |
| tryptophane | 0.9 |
| lysine | 3.5 |
| histidine | 1.3 |
| arginine | 3.8 |

Preferably, the natural cheese or the natural cheese product according to the invention has a fat content of 10 to 60 wt.%, most preferably 30 to 52 wt.%, based on the dry solids weight of the cheese product.

According to the invention the coagulable protein composition is specifically added during the preparation of the non-flowing natural cheese or the natural cheese product. The invention therefore also relates to a process for preparing a non-flowing natural cheese or natural cheese product. These processes are much less complicated than the process described in US-A-3,962,483.

The coagulable protein composition is added in non-coagulated form to cheese milk or curd by a conventional method of preparing natural cheese. To prevent the composition from partly being lost in the cheese whey, the protein composition may be added encapsulated in a macromolecular structure. Suitable substances for forming this macromolecular structure are, e.g., proteins or liposomes. If the coagulable protein composition is added in non-coagulated form to a curd in a conventional preparation method of natural cheese, said protein composition need not be encapsulated in a macromolecular structure.

By encapsulated is meant that the molecules of the protein composition are substantially completely enclosed in a macromolecular structure. If the macromolecular structure is formed by liposomes, this means that one or more molecules of the protein composition are in the vesicular structure of a liposome. If the macromolecular structure is formed by proteins, this means that one or more molecules of the protein composition are substantially completely enveloped by a molecule of the protein from which the macromolecular structure is built up.

The young cheese can be subjected to a ripening known for hard or semihard cheeses, e.g. cheeses prepared according to the Gouda or the cumin process. Thus the addition of specific additional enzymes that influence the ripening process may lead to interesting advantages. This is known to a person skilled in the art.

After preparing the cheese or the cheese product according to the invention this may be immediately subjected to heat treatment fixating the dimension and outer appearance, or the product may be sold as such, so that the final consumer can subject the product to the heat treatment.

The invention will now be further elucidated.

### Example 1

To a batch of milk of 400 l are added 4.0 kg protein K, and the mixture is standardized with cream to obtain a suitable fat/protein ratio, known to a person skilled in the art, for preparing a full-cream cheese. Subsequently, cheese is prepared by a normal process for preparing Gouda cheese. After the preparation the cheeses are pressed and brined in a conventional manner, after which the cheeses ripen in a cheese warehouse at 14°C to the desired taste and ripeness for use.

### Example 2

From a batch of milk of 400 l having a fat content of 2.70% and a protein content of 3.45% curd is prepared by a generally known process for preparing cumin cheese. After releasing the whey and acidifying the curd to pH 5.30 the curd blocks are cut in a suitable apparatus into pieces having a diameter of 0.5 to 1.0 cm. To this curd mass are added 1.6 kg protein K and 1.0 kg common slat, after which the whole is properly mixed and pressed to cheese in cheese vats by a known process. A part of the cheeses from this batch is foil bag packaged in the cold store at 5°C, and the other part is ripened in a cheese warehouse at 14°C to the desired taste and ripeness for use, while treated with a cheese plastic.

### Example 3

### Measurement of flow behavior:

The flow behavior of a product obtained according to the above examples can be tested and compared with a reference cheese to which no protein K is. added, by means of a testing method conventional in the industry. In this method a slice of cheese having a fixed and freely chosen diameter and height is cut out. This slice of cheese is heated in a Petri dish in an oven for a specific period of time and at an adjusted temperature of 150°C. The increase in diameter is a proper practical measure for the flow behavior. The resulting diameter can be readily determined by placing the Petri dish with its contents on a sheet of paper having concentric circles of a known diameter.

Cheese obtained according to the above examples shows little if any increase in diameter in spite of prolonged heating at high temperatures. Thus, e.g., an increase in diameter of 3% was found for Example 1 and an increase of 4% for Example 2.

## Claims

1. Use in a cheese or cheese product of 1 to 10 wt.% of a coagulable protein composition having a coagulation temperature between 65 and 95 °C, being added in non-coagulated form to cheese milk or a curd, following preparing natural cheese in a conventional method, for retaining the dimensions of the cheese or cheese product when the cheese or cheese product is heated above said coagulation temperature.

2. The use according to claim 1, wherein the coagulable protein composition is encapsulated in a Macromolecular structure.

3. The use according to claim 1, wherein the macromolecular structure is formed by proteins or liposomes.

4. The use according to any one of the preceding claims, wherein the coagulable protein composition has a coagulation temperature between 70 and 80°C.

5. The use according to any of the preceding claims, wherein the coagulable protein composition comprises one or more proteins selected from the group of chicken proteins, albumins, and non-denatured whey proteins.

6. The use according to any of the claims 1- 4, wherein the coagulable protein composition is protein K.

7. The use according to any of the preceding claims, wherein the cheese or cheese product has a fat content between 10 and 60 wt.% based on the dry solids weight of the cheese product.

8. The use according to any of the preceding claims, wherein the young cheese is subjected to a ripening known for hard or semihard, e.g. Gouda or cumin, cheese, whether or not after addition of additional ripening enzymes.

## Patentansprüche

1. Verwendung in Käse oder einem Käseprodukt von 1 bis 10 Gew.% einer gerinnungsfähigen Proteinzusammensetzung mit einer Gerinnungstemperatur zwischen 65 und 95°C, die in nicht geronnener Form zu Käsereimilch oder Quark gegeben wird, im Anschluß an die Herstellung von natürlichem Käse in einem herkömmlichen Verfahren, zum Beibehalten der Abmessungen des Käses oder Käseprodukts, wenn der Käse oder das Käseprodukt über die Gerinnungstemperatur hinaus erwärmt wird.

2. Verwendung gemäß Anspruch 1, worin die gerinnungsfähige Proteinzusammensetzung in einer makromolekularen Struktur verkapselt ist.

3. Verwendung gemäß Anspruch 1, worin die makromolekulare Struktur durch Proteine oder Liposomen gebildet wird.

4. Verwendung gemäß einem der vorhergehenden Ansprüche, worin die gerinnungsfähige Proteinzusammensetzung eine Gerinnungstemperatur zwischen 70 und 80°C hat.

5. Verwendung gemäß einem der vorhergehenden Ansprüche, worin die gerinnungsfähige Proteinzusammensetzung ein oder mehrere Proteine umfaßt, die aus der Gruppe der Geflügelproteine, Albumine und nicht-denaturierten Molkeproteine ausgewählt sind.

6. Verwendung gemäß einem der Ansprüche 1 bis 4, worin die gerinnungsfähige Proteinzusammensetzung Protein K ist.

7. Verwendung gemäß einem der vorhergehenden Ansprüche, worin der Käse oder das Käseprodukt einen Fettgehalt zwischen 10 und 60 Gew.% auf Basis des Trockensubstanzgehalts des Käseprodukts hat.

8. Verwendung gemäß einem der vorhergehenden Ansprüche, worin der junge Käse einer für harten oder halbharten Käse, z.B. Gouda oder Kumin, bekannten Reifung unterworfen wird, gegebenenfalls nach zusätzlicher Zugabe von Reifungsenzymen.

## Revendications

1. Utilisation dans un fromage ou un produit à base de fromage, de 1 à 10 % en poids d'une composition à base de protéine coagulable ayant une température de coagulation de 65 à 95 °C, ajoutée sous forme non coagulée dans du lait pour fromage ou un caillé, conformément à la préparation d'un fromage naturel selon un procédé classique, afin de maintenir les dimensions du fromage ou du produit à base de fromage lorsque le fromage ou le produit à base de fromage est chauffé au-dessus de ladite température de coagulation.

2. Utilisation selon la revendication 1, dans laquelle la composition à base de protéine coagulable est encapsulée dans une structure macromoléculaire.

3. Utilisation selon la revendication 1, dans laquelle la structure macromoléculaire est formée de protéines ou de liposomes.

4. Utilisation selon l'une quelconque des revendications précédentes, dans laquelle la composition à base de protéine coagulable a une température de coagulation de 70 à 80 °C.

5. Utilisation selon l'une quelconque des revendications précédentes, dans laquelle la composition à base de protéine coagulable comprend une ou plusieurs protéines choisies parmi le groupe consistant en les protéines de poulet, les albumines et les protéines lactosériques non dénaturées..

6. Utilisation selon l'une quelconque des revendications 1 à 4, dans laquelle la composition à base de protéine coagulable comprend la protéine K.

7. Utilisation selon l'une quelconque des revendications précédentes, dans laquelle le fromage ou le produit à base de fromage a une teneur en matière grasse de 10 à 60 % en poids par rapport au poids de solides secs du produit à base de fromage.

8. Utilisation selon l'une quelconque des revendications précédentes, dans laquelle le fromage jeune est soumis à un affinage connu pour un fromage dur ou semi-dur, par exemple le gouda ou un fromage au cumin, que ce soit ou non après addition d'enzymes d'affinage supplémentaires.
